# EUROPEAN PATENT APPLICATION

(11) **EP 0 590 905 A2**
(43) Date of publication of application: **06.04.1994**
(21) Application number: 93307625.9
(22) Date of filing: 27.09.1993
(51) Int. Cl.: G11B 5/39

(54) **Magnetic sensor**

(30) Priority: 02.10.1992 US 955820
(71) Applicant: International Business Machines Corporation, Armonk, N.Y. 10504 (US)
(72) Inventor: Chen, Mao-Min, San Jose, California 95120 (US); Kung, Kenneth Ting-Yuan, San Jose, California 95120 (US); Lee, Rodney Edgar, Salinas, California 93907 (US); Robertson, Neil Leslie, Campbell, California 95008 (US)
(74) Representative: Burt, Roger James, Dr.

(57) **Abstract**

A magnetoresistive (MR) sensor having electrically conductive lead structures (41) for electrically connecting the MR element with external circuitry is described. The lead structures comprise a first or principal conductive layer (38) overlying the MR element (32) or bias layers in the end regions of the MR sensor and extending to the air bearing surface (ABS) (31) of the sensor. A second conductive layer (36) is deposited over the first conductive layer and extends from a point (44) on the first conductive layer which is offset or recessed from the sensor ABS. The second conductive layer increases the thickness of the sensor lead structures thus reducing the total resistance of the lead structures. Since the second conductive layer is not exposed at the sensor ABS, mechanical and electrochemical requirements for the conductive materials are greatly lessened allowing a wide selection of conductive material choices for the second conductive layer.

## Description

The present invention relates generally to magnetic sensors for reading recorded information signals from a magnetic medium, and in particular, to a magnetoresistive read transducer.

The prior art discloses a magnetic transducer referred to as magnetoresistive (MR) sensor or head which has been shown to be capable of reading data from a magnetic media surface at high linear densities. An MR sensor detects magnetic field signals through the resistance changes of a read element fabricated of a magnetoresistive material as a function of the magnitude and direction of magnetic flux being sensed by the element. Electrically conductive leads couple the MR sensor to amplifier and detection circuitry and provide both a sense current and bias current to the MR sensor to accomplish detection of these resistance changes and set a linear operating point for the MR read element.

Typically, the conductive lead structures have comprised the well-known, low resistivity materials which are good electrical conductors. For example, U.S. Patent No. 4,622,613 to Nomura, et al. describes an MR sensor in which the conductive lead structures are formed of copper, gold, and silver. U.S. Patent No. 4,663,684 to Kamo, et al. describes an MR sensor in which the conductive lead structures are formed of gold or aluminum.

Other conductive lead structures have utilized multi-layer configurations. U.S. Patent No. 4,503,394 discloses an MR sensor in which the conductive lead structures are formed of a two-layer assembly in which the first layer is made from a material selected from the group consisting of Cr, Mo, and Ti and the second layer is made from a material selected from the group consisting of Al, Au, Pt and Pd. U.S. Patent No. 4,914,538 discloses an MR sensor having a lead structure comprising a thin film of tungsten having a thin film overlayer, or, alternatively, a thin film overlayer and a thin film underlayer, with both the thin film overlayer and the thin film underlayer formed of a material taken from the group consisting of Ti, Ta, Cr, Zr, Hf and TiW.

In the MR sensor conductor lead application, the materials face much more stringent requirements when compared to other interconnect conductors, such as for semiconductor devices, for example. This is because the conductor lead is exposed at the slider air bearing surface (ABS) and therefore has little protection from the severe mechanical environment where head-disk contact frequently occurs and the severe corrosion environment where chemical attack occurs both during subsequent processing and also in actual use where the operating environment may not be well controlled. Thus the lead structure must exhibit sufficient mechanical stability to withstand occasional contact with the disk and chemical stability to withstand the corrosive environment that may occur during the operating lifetime of a disk file in which the MR sensor is installed. EP-A 522890 (published 28.07.93) discloses an MR sensor incorporating conductive lead structures and materials providing conductive leads having suitable characteristics which are stable during the sensor fabrication processes and throughout the useful life of the sensor.

U.S. Patent No. 4,622,613 discloses an MR sensor or head wherein the conductive leads are not exposed at the slider ABS thus preventing or minimizing the mechanical and corrosion problems associated with the environment present at the slider ABS/media interface. The disclosed MR head includes an MR element formed in a stripe shape of which one edge is exposed at the head (slider) ABS, while the opposite edge is disposed remotely to the head air bearing surface. Conductive leads or electrodes are formed in electrical and physical connection with portions of the MR stripe edge disposed away from the head ABS such that no portion of the conductive leads is exposed at the head surface. However, since the contact area between the MR element and the conductor leads is small, additional manufacturing problems are encountered and the reliability of electrical contact between the MR element and the conductor leads is low. On the other hand, if the contact area between the conductor leads and the MR element is enlarged sufficiently to avoid the manufacturing and reliability issues, the length of the conductor lead overlap on the MR element limits the minimum sensor height thus limiting the ability of the sensor to provide a high level readback signal for high data density recording applications. To improve the reliability of the electrical contact, metal conductor layers are formed on a major surface of the MR stripe such that the conductor leads are overlapped by the metal conductor layers. Since the metal conductor layers are exposed at the slider ABS, metal conductor layers must be fabricated of relatively hard metals to provide an MR head surface comprised of only hard metals.

In addition to the above-described mechanical and material problems which must be overcome to provide a practical MR read sensor, signal noise generated during operation of the MR sensor must be minimized to provide a high signal-to-noise ratio to allow accurate detection of the stored data being read. A primary factor of MR sensor noise is the total MR sensor resistance. In order to minimize the MR sensor noise, it is highly desirable to minimize the total MR sensor resistance including the MR read element resistance and the conductive lead resistance.

Prior art methods for minimizing the conductor lead resistance include increasing the lead thickness, to increase the total lead cross-sectional area, and utilizing a conductive material having a lower resistivity. Both methods have limitations. Increasing the conductor lead thickness results in an increased conductor lead-to-MR element step height at and near the head or slider ABS which adds to the difficulty of manufacture and aggravates the mechanical problems encountered at the ABS/media interface. Also, this increased step height can cause step coverage problems for the MR element second shield gap and increased curvature for the inductive write element deposition surface. Utilizing a material having a lower resistivity presents the problems associated with selecting a new lead material which also must satisfy a number of relatively stringent mechanical and electrochemical requirements that all sensor materials exposed at the slider ABS must satisfy.

It is accordingly an object of the present invention to provide a magnetic sensor including conductive lead structures having reduced MR conductive lead resistance.

According to a first aspect of the invention there is provided a magnetic sensor comprising: a layer of magnetoresistive material formed on a substrate; and a plurality of electrically conductive lead structures electrically coupled to said layer of magnetoresistive material at spaced positions, each said electrically conductive lead structure comprising a first conductive layer extending to an exposed surface of said magnetic sensor and a second conductive layer in electrical and physical contact with said first conductive layer, said second conductive layer extending away from said exposed surface from a point on said first conductive layer remote from said exposed surface, whereby, when a signal output means is connected between a pair of said electrically conductive lead structures, resistance changes in said magnetoresistive material responsive to magnetic fields which are intercepted by said layer of magnetoresistive material can be detected.

According to a second aspect of the invention there is provided a magnetic storage system comprising: a magnetic storage medium having a plurality of tracks for recording of data; a magnetic transducer maintained in a closely spaced position relative to said magnetic storage medium during relative motion between said magnetic transducer and said magnetic storage medium, said magnetic transducer comprising a magnetic sensor as claimed in any preceding claim; actuator means coupled to said magnetic transducer for moving said magnetic transducer to selected tracks on said magnetic storage medium; and means coupled between two of said electrically conductive lead structures for detecting resistance changes in said magnetoresistive material responsive to magnetic fields representative of data bits recorded in said magnetic storage medium intercepted by said layer of magnetoresistive material.

Adding one or more layers of conductive lead material to the principal lead structure increases the cross-sectional area of the conductor lead as a whole thereby substantially reducing the total lead resistance. The material utilized for the current-carrying second layer is selected from low-resistivity lead materials. While the second conductive layer can be of the same material as the principal current-carrying lead structure, since the second conductive layer is not exposed at the slider ABS the mechanical and electrochemical requirements are substantially reduced thereby providing a wider range of conductive materials which will provide suitable lead materials. For example, copper (Cu) is an appropriate choice providing a conductive layer which has about one-half the resistivity of gold (Au), a commonly used lead material in the prior art. If required, the second conductive layer can comprise a multilayered structure including a layer of the conductive material sandwiched between two protective layers, such as two tantalum (Ta) layers, to protect the conductive material from subsequent sensor processing steps, for example, a Ta/Cu/Ta layered structure. Utilizing one or more conductive layers formed to overlay the principal lead structure recessed from the slider ABS substantially reduces the total resistance of the overall lead structure while minimizing the lead-to-MR element step height increase in the vicinity of the head surface.

Preferred embodiments of the invention will now be described, by way of example only, with reference to the accompanying drawings in which:
Fig. 1 is a simplified block diagram of a magnetic disk storage system embodying the present invention;
Fig. 2 is an end view of a specific embodiment of an MR read sensor assembly embodying the present invention;
Fig. 3 is a plan view of the MR sensor shown in Fig. 2;
Fig. 4 is a partial section view taken along lines 4-4 of Fig. 3;
Fig. 5 is an end view of another embodiment of an MR read sensor assembly embodying the present invention;
Fig. 6 is a plan view of the MR read sensor shown in Fig. 5;
Fig. 7 is an end view of a specific embodiment of the MR read sensor shown in Fig. 5; and
Fig. 8 is a diagram illustrating an embodiment of a process according to the present invention for fabricating the MR read sensor shown in Fig. 7.

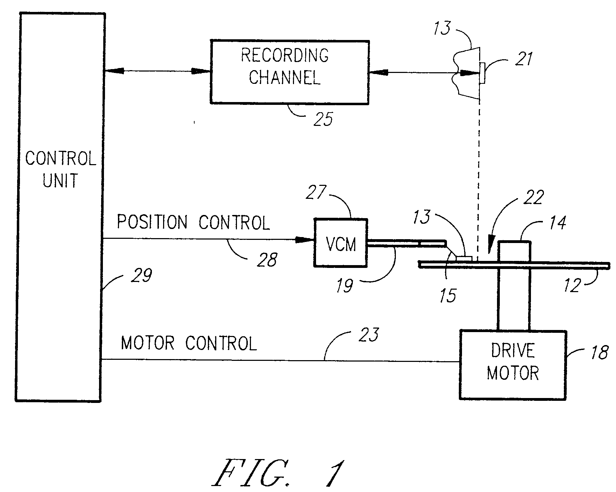

In the following, the present invention is described as embodied in a magnetic disk storage system as shown in Fig. 1. However, it will be apparent that the invention is also applicable to other magnetic recording systems such as a magnetic tape recording system, for example. In the storage system of Fig. 1, at least one rotatable magnetic disk 12 is supported on a spindle 14 and rotated by a disk drive motor 18. The magnetic recording media on each disk is in the form of an annular pattern of concentric data tracks (not shown) on disk 12.

At least one slider 13 is positioned on the disk 12, each slider 13 supporting one or more magnetic read/write sensors or heads 21. As the disks rotate, the sliders 13 are moved radially in and out across the disk so that the heads 21 may access different portions of the disk surface 22 containing the data. Each slider 13 is attached to an actuator arm 19 by means of a suspension 15. The suspension 15 provides a slight spring force which biases the slider 13 against the disk surface 22. Each actuator arm 19 is attached to an actuator means 27. The actuator means shown in Fig. 1 is a voice coil motor (VCM). The VCM is a coil moveable within a fixed magnetic field, and the direction and velocity of the coil movements are controlled by the current supplied.

During operation of the disk storage system, the rotation of the disk 12 generates an air bearing between the slider 13 and the disk surface 22. The air bearing thus counterbalances the slight spring force of the suspension 15 and supports the slider 13 off the disk surface by a small, substantially constant spacing during operation.

The various components of the disk storage system are controlled in operation by signals generated by control unit 29, such as access control signals and internal clock signals, and which includes logic control circuits, storage means and a microprocessor. The control unit 29 generates control signals to control various system operations such as motor control signals on line 23 and head position control signals on line 28. The control signals on line 28 provide the desired current profiles to optimally move and position a selected slider 13 to the desired data track on the associated disk 12. Read and write signals are communicated to and from read/write heads 21 by means of recording channel 25.

The above description of a typical magnetic disk storage system, and the accompanying illustration of it in Fig. 1 are for representation purposes only. It should be apparent that disk storage systems may contain a large number of disks and actuators, and each actuator may support a number of sliders.

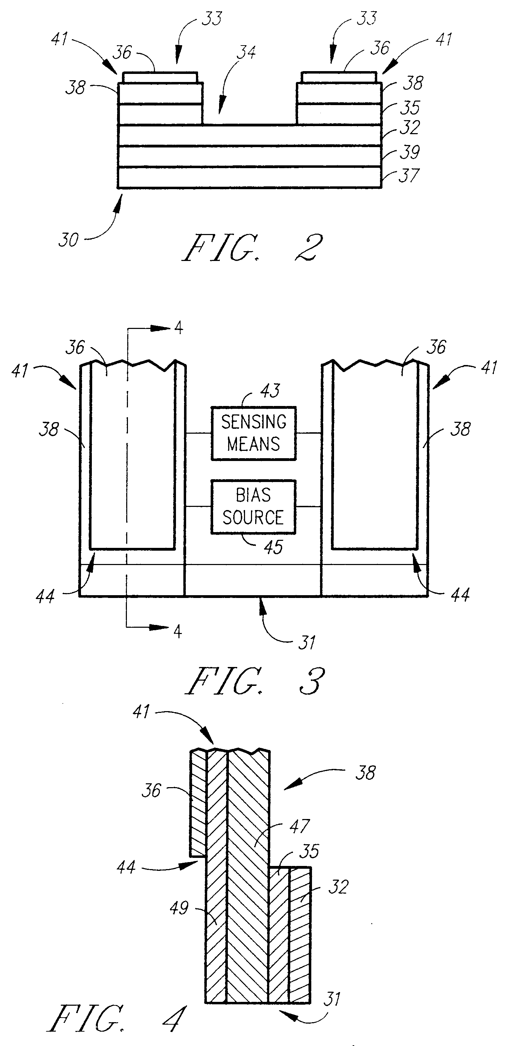

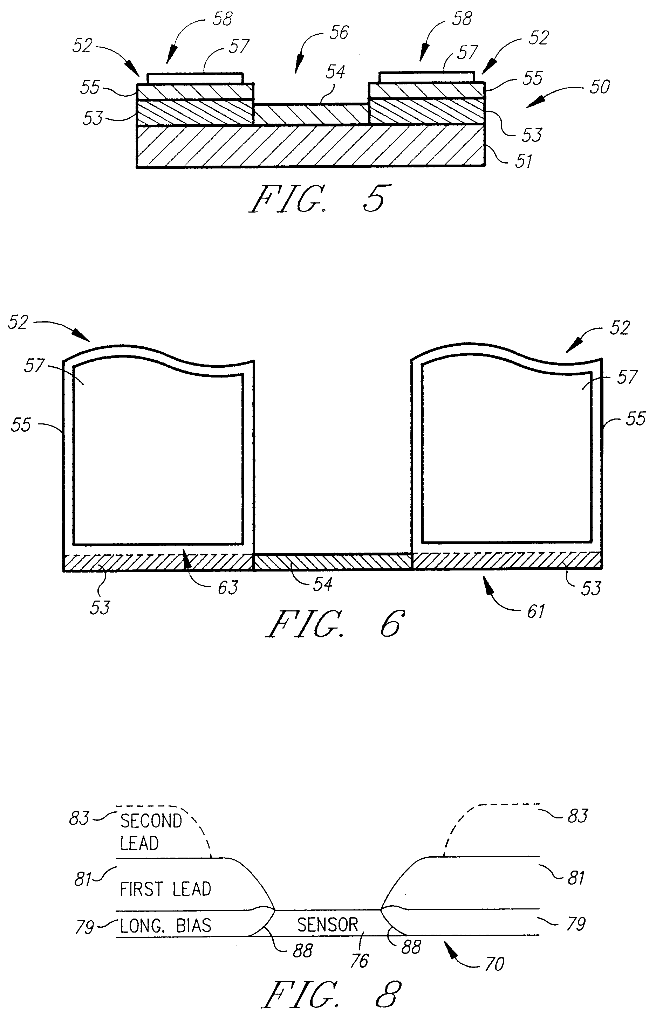

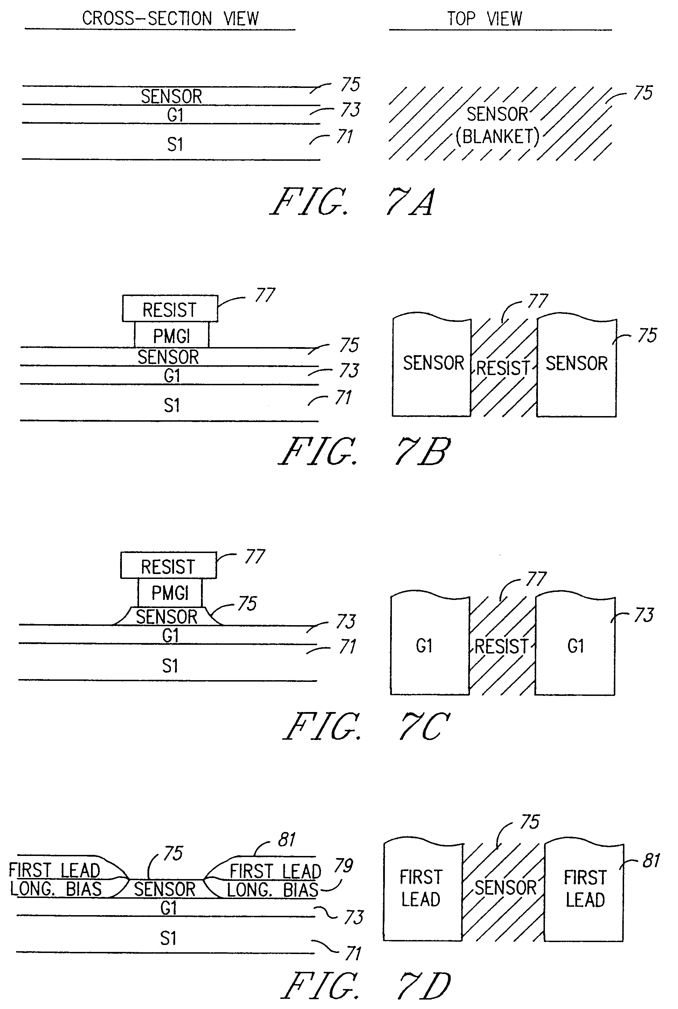

Referring now to Figs. 2, 3 and 4, a preferred embodiment of the present invention is illustrated in conjunction with a magnetoresistive read sensor of the the type described in U.S. Patent No. 4,663,685. A magnetoresistive (MR) read sensor 30 comprises a layered structure including a layer 32 of ferromagnetic material having a suitable magnetoresistive characteristic formed on a suitable substrate (not shown). The MR sensor 30 can be divided into two regions, a central active region 34, where actual sensing of data is accomplished, and end regions 33. The regions 33, 34 are biased in different manners as is known in the art with longitudinal bias in the end regions 33 and transverse bias in the active central region 34. The longitudinal bias in the end regions 33 is produced by a bias layer 35 which is formed to be in direct physical contact with the MR layer 32. Bias layer 35 may comprise either an antiferromagnetic material or a hard magnetic material. The transverse bias in the active region 34 is produced by a soft magnetic film layer 37 which is separated from the MR layer 32 by a thin nonmagnetic spacer layer 39 whose purpose is to prevent, within the active central region, a magnetic exchange coupling between the MR layer 32 and the soft magnetic bias layer 37. Electrically conductive leads 41 comprising first or principal current-carrying lead structures 38 and second current-carrying conductive layers 36 deposited on a major surface of the principal lead structures couple the MR sensor 30 to external circuitry (as shown in Fig. 1). The principal lead structures 38 overlay the MR element 32 in the sensor end regions 33 and extend to the sensor ABS surface 31. The second conductive layers 36 are deposited over and in physical contact with the principal lead structures 38 overlying the principal lead structures and extend from a point 44 remote to or recessed from the sensor ABS 31 (as shown in Figs. 3 and 4). While the only requirement is that the second conductive layer be sufficiently recessed from the ABS such that it will not be exposed at the ABS, the second conductive layer 36 may extend from point 44 spaced from the sensor surface 31 such that the second conductive layer 36 does not overlay the MR layer 32. While in this embodiment the principal lead structure is deposited in physical contact with the longitudinal bias layer 35, in other embodiments, the principal lead structure can be in direct physical contact with the MR layer 32. That portion of the MR layer 32 disposed between the inner edges of the principal conductive lead structures 38 comprises the portion of the active region 34 over which the output signal is developed.

With continuing reference to Fig. 3, an output signal iₛ can be coupled out to sensing means 43, with the aid of the conductive leads 41 which are electrically connected to the MR sensor 30. The signal iₛ enables the sensing means 43 to determine the resistance changes in the central region 34 resulting from the magnetic fields which are intercepted by the MR sensor 30 from data previously recorded on a magnetic medium, for example. A bias source 45 is also connected to conductive leads 41 to supply a bias current which, in conjunction with a soft magnetic bias layer 37, produces the transverse bias in the active region 34 as is known in the art. Typically, sensing means 43 and bias source 45 may be incorporated in the read/write channel circuitry 25 (as shown in Fig. 1).

According to the present invention, the principal conductive lead structures 38 of conductive leads 41 can be a single layer of suitable electrical material, such as Au, gold-nickel (AuNi) or aluminum (Al), for example. Alternatively, the principal conductive lead structures 38 can be multilayered structures 47, 49 comprising a principal current carrying layer 47 of ruthenium (Ru), iridium (Ir) or rhodium (Rh) covered with an adhesion overlayer 49 formed of titanium (Ti) or Ta, for example (as shown in Fig. 4). Additional embodiments of multilayered lead structures suitable for use as the principal conductive lead structures 38 are described in the above-cited U.S. patent application and in U.S. Patent No. 4,914,538.

While it has been found that Ru, Ir or Rh alone will provide a reliable conductive lead structure in thin film form, adhesive layers on one or both sides of the principal current carrying layer provide increased reliability in an operational environment. All three materials, Ru, Ir and Rh are suitable for the conductive lead structures 38, 41 since they have excellent hardness and corrosion characteristics and have little tendency to interdiffuse into adjacent layers. The hardness and mechanical strength of Ru, Ir and Rh provide protection against mechanical damage such as scratching and smearing (shorting) thus making them suitable materials for exposure at the sensor surface 31.

As described above, the second conductive layer 36 of conductive leads 41 extends from a point 44 which is recessed from the sensor ABS 31 and hence is not exposed to the harsh environment at the slider ABS/disk surface interface. Thus, the conductive lead 41 step height, i.e., thickness, is broken into two smaller steps, the second step being offset from the principal conductive lead structure 38 edge and the ABS 31. As a result of this offset, the head surface 31 topography will be smoother, when compared to a sensor having a conductive lead of the same thickness as conductive leads 41, and the coverage by the deposited second gap material (not shown) will be more conformal, resulting in fewer lead-to-shield shorts. Additionally, since the step height of the second conductive layer 36 will not appear at the ABS 31, adding the second conductive layer 36 will not impact the inductive write head (not shown) pole tip curvature due to the conductive lead step height at the ABS 31.

Since the second conductive layer 36 is recessed and not exposed at the ABS 31, the mechanical and electrochemical requirements are greatly lessened resulting in a wider choice of conductive materials suitable for use as the second conductive layer 36. In general, the materials utilized as second layer 36 conductors should be good conductors, for example, metal conductors such as Cu, Ag, Au, AuNi and Al are suitable materials for use as the second conductive layer 36. The second conductive layer 36 can comprise a single layer or can also comprise a multilayered structure, such as a layer of Au protected by an overlying layer of Ta or Chromium (Cr) or the trilayer structure Ta/Cu/Ta described hereinabove, for example. In a similar manner as described above, the second conductive layer 36 may comprise multiple layers of conductive material, each succeeding layer overlying a previous layer and offset or recessed from an edge of the underlying layer.

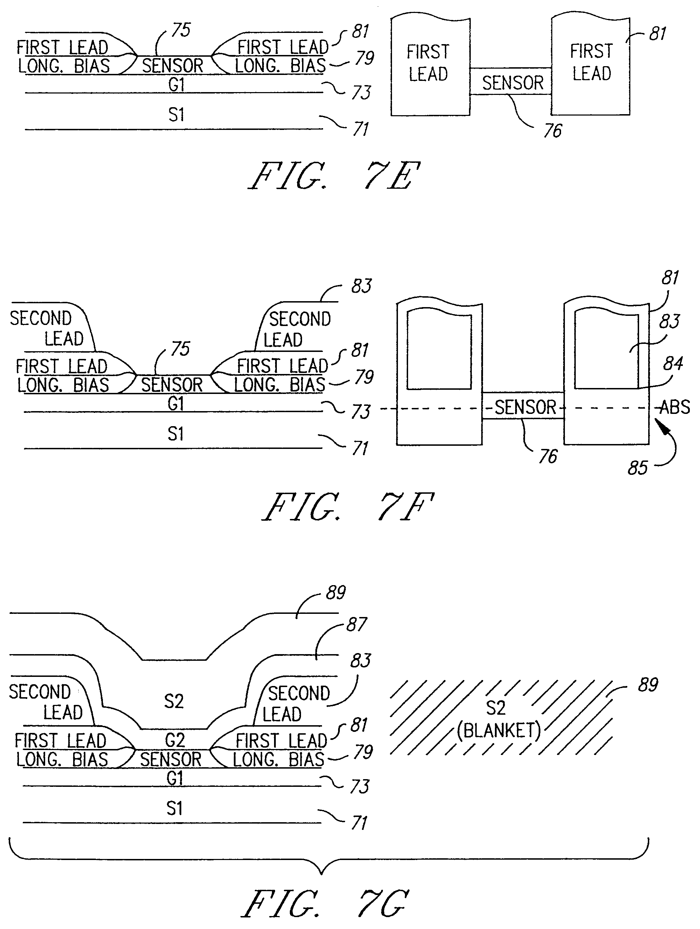

Referring now to Figs. 5 and 6, a second embodiment of the present invention is shown. The MR read sensor 50 comprises an MR layer 54 which extends over substantially only the central active region 56 of the sensor 50 and a hard magnetic bias layer 53 in each end region 58 of the sensor 50 deposited on a suitable substrate 51. The hard magnetic bias layer 53 in each end region 58 forms an abutting junction with the MR layer 54 to produce longitudinal bias in the MR read sensor 50. Electrically conductive leads 52 comprising first or principal current-carrying lead structures 55 and second current-carrying conductive layers 57 deposited on a major surface of the principal lead structures couple the MR sensor 50 to external circuitry (as shown in Fig. 1). In contrast to that described above with reference to Figs. 2 and 3, the principal lead structures 55 overlay only the hard magnetic bias layer 53 in each end region of the sensor 50 extending to the sensor ABS surface 61 and do not overlay the MR layer 54. The second conductive layers 57 are deposited over and in physical contact with the principal lead structures 55 overlying the principal lead structures and extending from a point 63 remote to or recessed from the sensor ABS 61 (as shown in Fig. 6). The second conductive layer 57 may extend from point 63 spaced from the sensor surface 61 such that the second conductive layer 57 does not overlay the MR layer 54. The hard magnetic bias layer 53 provides for electrical and magnetic continuity to the MR layer 54. The hard magnetic bias layer 53 can be provided with a single layer of metallurgy such as cobalt (Co), Cr, cobalt-platinum (CoPt) or CoCrPt, for example, although the use of under- and/or overcoats such as tungsten (W) or gold (Au) may be desirable. As is known in the art, transverse bias is also required in the central active region 56. This bias can be provided by soft film bias, shunt bias, barber-pole bias configuration or any other compatible transverse bias technique. The transverse structure has not been shown and is included in the block representing the MR layer 54.

Referring now to Figs. 7 and 8, a specific embodiment 70 of the MR sensor 50 shown in Figs. 5 and 6 and an embodiment of a process for fabricating the MR sensor 70 are shown. The process comprises the steps of depositing, upon a suitable substrate (not shown), a first shield layer 71 of a magnetic material, such as NiFe or Sendust (AlSiFe), a first gap layer 73 of an insulting material, such as silicon dioxide (SiO₂) or alumina (Al₂O₃), and a sensor layer 75. The sensor layer 75 comprises a trilayer including a soft magnetic layer, a non-magnetic spacer layer and an MR layer of ferromagnetic material, such as NiFe, for example, blanket deposited over the first gap layer 73. The process then continues by utilizing photolithography to form a bilayer photoresist liftoff stencil mask 77 for patterning the sensor layer 75 and the first or principal conductive lead structure 81. Stencil mask 77 is used to define each edge of the sensor layer 75 as the sensor trilayer blanket material is removed in the regions that will underlay the longitudinal bias layer 79 and the first conductive lead 81 by a subtractive process such as sputter etching, ion milling or chemical etching to produce the sensor layer 75 as shown at Fig. 7c. The material for the longitudinal bias layer 79, which preferably is a hard bias layer but may alternatively be an exchange bias layer, and the first conductive layer 81 are then blanket deposited and patterned utilizing the stencil mask 77 in a metal liftoff process as shown at Fig. 7d. All magnetic and conductive material deposited over the stencil mask 77 during the blanket deposition is removed, along with the stencil mask by the liftoff process to produce a sensor 70 having longitudinal bias layers 79 with overlying first conductive leads 81 in the sensor end regions only, each of the longitudinal bias layers 79 having a contiguous junction with the sensor trilayer structure 75 which extends over only the sensor central active region. As the process continues, the sensor stripe 76 is then patterned utilizing photolithography and ion milling techniques as shown in Fig. 7e. The second conductive lead 83 is then formed by utilizing photolithography, blanket deposition and metal liftoff techniques, in a manner similar to the process for forming the longitudinal bias layer 79 and first conductive lead 81, as shown in Fig. 7f. As described with reference to Figs. 5 and 6, the second conductive leads 83 overlay the first conductive leads 81 and extend from a point 84 on the first conductive lead remote or recessed from the sensor ABS 85. To complete the MR sensor 70, the second gap layer 87 and second magnetic shield layer 89 are formed by blanket deposition, as shown in Fig. 7g, and then the process continues to form an inductive write head and other components of a complete magnetic read/write transducer (not shown).

The MR read sensor 70 fabricated by the above-described process is shown in Fig. 8 which shows an edge or the ABS view of the sensor, i.e., the surface of the sensor which is in close proximity to the magnetic recording medium from which previously recorded magnetic data is to be read. The sensor 70 comprises an MR element 76 which extends over the central active region of the sensor, longitudinal bias layers 79 and first conductive leads 81. The longitudinal bias layers 79 form an abutting junction 88 with the MR element 76 and provide electrical connection between the MR element 76 and the first conductive leads 81 which overlay the longitudinal bias layers. The longitudinal bias layers 81 extend over the end regions of sensor 70 to provide a longitudinal bias field for operation of the sensor. The second conductive leads 83 overlying the first conductive leads 81, as described above, are recessed from the sensor ABS and therefore are not exposed at the ABS/media surface interface.

While the invention has been particularly shown and described with reference to preferred embodiments thereof, it will be understood by those skilled in the art that various other changes in the form and details may be made therein without departing from the spirit and scope of the invention.

## Claims

1. A magnetic sensor comprising:
a layer (32) of magnetoresistive material formed on a substrate; and
a plurality of electrically conductive lead structures (41) electrically coupled to said layer of magnetoresistive material at spaced positions, each said electrically conductive lead structure comprising a first conductive layer (38) extending to an exposed surface (31) of said magnetic sensor and a second conductive layer (36) in electrical and physical contact with said first conductive layer, said second conductive layer extending away from said exposed surface from a point on said first conductive layer remote from said exposed surface, whereby, when a signal output means is connected between a pair of said electrically conductive lead structures, resistance changes in said magnetoresistive material responsive to magnetic fields which are intercepted by said layer of magnetoresistive material can be detected.

2. A magnetic sensor as claimed in claim 1 including two said electrically conductive lead structures wherein each said electrically conductive lead structure overlays said layer of magnetoresistive material in end regions of said magnetic sensor only, said end regions separated by a central active region of said magnetic sensor.

3. A magnetic sensor as claimed in claim 1 or claim 2 further comprising a longitudinal bias layer (35) overlying said layer of magnetoresistive material, said first conductive lead layer overlying and in electrical and physical contact with said longitudinal bias layer.

4. A magnetic sensor as in claim 3 wherein said longitudinal bias layer is formed in said end regions only.

5. A magnetic sensor as claimed in any preceding claim wherein said second conductive layer is of a conductive material selected from the group consisting of copper, silver, gold, gold-nickel and aluminum.

6. A magnetic sensor as claimed in any preceding claim wherein said first conductive layer comprises a multilayered conductive structure.

7. A magnetic sensor as claimed in any preceding claim wherein said second conductive layer comprises a multilayered conductive structure.

8. A magnetic sensor as claimed in claim 7 wherein said second conductive layer comprises a layer of conductive material and a protective layer of material overlying said layer of conductive material.

9. A magnetic sensor as claimed in claim 7 wherein said second conductive layer comprises a layer of conductive material having a first protective layer overlying said layer of conductive material and a second protective layer underlying said layer of conductive material.

10. A magnetic sensor as claimed in claim 8 or claim 9 wherein said protective layer is of a material selected from the group consisting of tantalum and chromium.

11. A magnetic sensor as claimed in any preceding claim wherein said first conductive layer is in electrical and physical contact with said layer of magnetoresistive material.

12. A magnetic sensor as claimed in any preceding claim wherein said point on said first conductive layer is spaced from said exposed surface such that said second conductive layer does not overlay said layer of magnetoresistive material.

13. A magnetic storage system comprising:
a magnetic storage medium (12) having a plurality of tracks for recording of data;
a magnetic transducer (21) maintained in a closely spaced position relative to said magnetic storage medium during relative motion between said magnetic transducer and said magnetic storage medium, said magnetic transducer comprising a magnetic sensor as claimed in any preceding claim;
actuator means (27) coupled to said magnetic transducer for moving said magnetic transducer to selected tracks on said magnetic storage medium; and
means (43) coupled between two of said electrically conductive lead structures for detecting resistance changes in said magnetoresistive material responsive to magnetic fields representative of data bits recorded in said magnetic storage medium intercepted by said layer of magnetoresistive material.

14. A method for fabricating of a magnetoresistive read sensor having multilayered conductive leads wherein at least one layer of each said multilayered conductive lead extends from a point remote from an exposed surface of said magnetoresistive read sensor, said method comprising the steps of:
depositing a magnetoresistive layer defining a central active region of said magnetoresistive sensor;
forming a first stencil mask covering said central active region of said magnetoresistive sensor;
depositing a layer of magnetic material over regions of said magnetoresistive sensor not covered by said stencil mask for providing a longitudinal bias layer;
depositing a first conductive lead layer of electrically conductive material over said layer of magnetic material;
removing said first stencil mask defining passive end regions of said magnetoresistive sensor separated by said central active region and having a longitudinal bias layer of magnetic material with an overlying first conductive lead layer in said passive end regions, said magnetic material in said end regions forming an abutting junction with one end of said magnetoresistive layer;
forming a second stencil mask covering said central active region and selected portions of said passive end regions of said magnetoresistive sensor;
depositing a second conductive lead layer of electrically conductive material over portions of said passive end regions not covered by said second stencil mask; and
removing said second stencil mask for defining said second conductive lead layers overlying each of said first conductive lead layers and extending away from said magnetoresistive sensor exposed surface from a point on each said first conductive lead layer remote from said exposed surface.

15. A method as claimed in claim 14 wherein the steps of removing said first and second stencil masks comprise a metal liftoff process.

16. A method as claimed in claim 14 or 15 wherein said first and second stencil masks comprise bilayer photoresist masks.

17. A method as claimed in any of claims 14 to 16 including the further step of defining the height of said magnetoresistive layer in said central active region after the removal of said first stencil mask.
